# EUROPEAN PATENT APPLICATION

(11) **EP 4 387 120 A1**
(43) Date of publication of application: **19.06.2024**
(21) Application number: 22863093.5
(22) Date of filing: 12.08.2022
(51) Int. Cl.: H04B 7/185

(54) **SATELLITE COMMUNICATION METHOD, DEVICE, AND SYSTEM**

(30) Priority: 31.08.2021 CN 202111013058
(71) Applicant: Huawei Technologies Co., Ltd., Shenzhen, Guangdong 518129 (CN)
(72) Inventor: XIE, Gang, Shenzhen, Guangdong 518129 (CN); LI, Hao, Shenzhen, Guangdong 518129 (CN); LI, Ping, Shenzhen, Guangdong 518129 (CN)
(74) Representative: Gill Jennings & Every LLP
(86) International application number: PCT/CN2022/112301
(87) International publication number: WO 2023/029953

(57) **Abstract**

Embodiments of this application provide a satellite communication method, an apparatus, and a system, to resolve a problem of low service availability in a process of forwarding a service data packet between satellites. The method includes: A microwave apparatus of a second satellite detects that a first feeder link between the microwave apparatus of the second satellite and a gateway station is normal. The microwave apparatus of the second satellite sends first indication information to a microwave apparatus of a first satellite through a transmission apparatus of the second satellite and a transmission apparatus of the first satellite, where the first indication information indicates that the first feeder link is normal. The microwave apparatus of the first satellite sends a first message to the transmission apparatus of the first satellite based on the first indication information. The transmission apparatus of the first satellite determines first path information based on the first message. The transmission apparatus of the first satellite initiates, based on the first path information, establishment of a service connection from the first satellite to the second satellite.

## Description

This application claims priority to Chinese Patent Application No. 202111013058.6, filed with the China National Intellectual Property Administration on August 31, 2021 and entitled "SATELLITE COMMUNICATION METHOD, APPARATUS, AND SYSTEM", which is incorporated herein by reference in its entirety.

### TECHNICAL FIELD

This application relates to the field of satellite communication technologies, and in particular, to a satellite communication method, an apparatus, and a system.

### BACKGROUND

With rapid development of space information technologies, satellite networks are more widely applied.

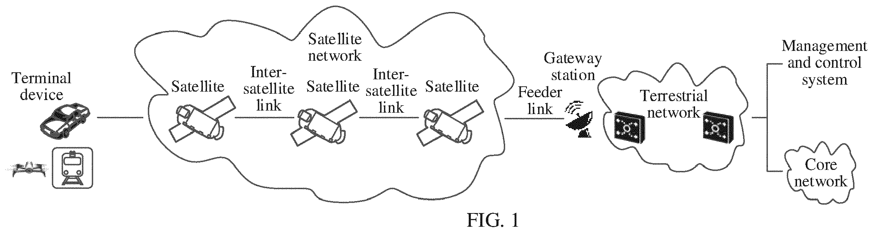

As shown in FIG. 1, satellite networking mainly includes a terminal device, a satellite network, a gateway station, a terrestrial network, a management and control system, and a core network. The terminal device may be a handheld device, or an access device deployed on an airplane, a ship, a train, or an automobile. The satellite network includes a plurality of satellites, and the satellites are connected through an inter-satellite link. The inter-satellite link may be a microwave or laser connection. The gateway station is configured to connect to the satellite through a feeder link. The feeder link may be a microwave connection. The gateway station is deployed on the ground and is connected to the terrestrial network. The terrestrial network is a network composed of routers or transmission devices. The management and control system is configured to process satellite management and control data. The core network is configured to cooperate with the management and control system to process service data of the terminal device.

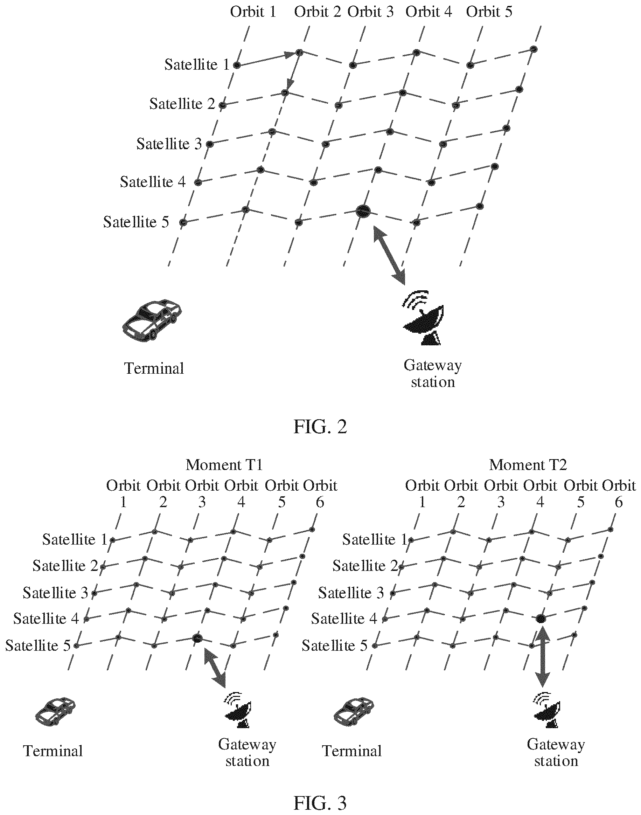

In a conventional technology, service data transmission is mainly a connectionless technology. A technical feature of the technology is that each satellite computes, based on network topology information, a path to a destination satellite in real time, and determines a next satellite to which service data is to be forwarded. Specifically, as shown in FIG. 2, it is assumed that the terminal device is directly connected to a satellite 1 in an orbit 1, and the gateway station is directly connected to a satellite 5 in an orbit 4. The orbit 1 to the orbit 6 represent six different orbits, and one or more satellites in each orbit move in a same trajectory. In FIG. 2, five satellites in an orbit are numbered, to obtain a satellite 1 to a satellite 5. First, after receiving a service data packet from the terminal device, the satellite 1 in the orbit 1 computes a path from the satellite 1 in the orbit 1 to the satellite 5 in the orbit 4. Assuming that the computed path points to a satellite 1 in an orbit 2, the satellite 1 in the orbit 1 forwards the service data packet to the satellite 1 in the orbit 2. Then, the satellite 1 in the orbit 2 computes a path from the satellite 1 in the orbit 2 to the satellite 5 in the orbit 4. Assuming that the computed path points to a satellite 2 in the orbit 2, the satellite 1 in the orbit 2 forwards the service data packet to the satellite 2 in the orbit 2. Subsequently, the satellite 2 in the orbit 2 performs a same computation and forwards the service data packet to a next satellite until the service data packet arrives at the satellite 5 in the orbit 4.

In the foregoing solution, in a process of forwarding the service data packet, the path computation needs to be frequently performed. When network resources are limited, occupying excessive network resources by the path computation may cause a decrease in network resources used to transmit the service data. Consequently, utilization of the network resources is reduced, and duration that can be used to transmit the service data is reduced, that is, service availability is reduced.

### SUMMARY

Embodiments of this application provide a satellite communication method, an apparatus, and a system, to resolve a problem of low service availability in a process of forwarding a service data packet between satellites.

To achieve the foregoing objective, the following technical solutions are used in the embodiments of this application. According to a first aspect, a satellite communication method is provided. Specifically, a microwave apparatus of a second satellite detects that a first feeder link between the microwave apparatus of the second satellite and a gateway station is normal. The microwave apparatus of the second satellite sends first indication information to a microwave apparatus of a first satellite through a transmission apparatus of the second satellite and a transmission apparatus of the first satellite, where the first indication information indicates that the first feeder link is normal. The microwave apparatus of the first satellite sends a first message to the transmission apparatus of the first satellite based on the first indication information, where the first message is used to request to establish a service connection from the first satellite to the second satellite, the service connection is used for service data transmission between a terminal device and the gateway station, and the terminal device is connected to the first satellite. The transmission apparatus of the first satellite determines first path information based on the first message, where the first path information corresponds to the service connection from the first satellite to the second satellite. The transmission apparatus of the first satellite initiates, based on the first path information, establishment of the service connection from the first satellite to the second satellite.

In the satellite communication method provided in this embodiment of this application, when the microwave apparatus of the second satellite detects that the first feeder link to the gateway station is normal, after receiving a request for establishing the service connection from the first satellite to the second satellite, the transmission apparatus of the first satellite determines the path information corresponding to the service connection, and initiates the establishment of the service connection. In comparison with a conventional technology, in this application, the path information corresponding to the service connection to the second satellite needs to be determined only on the first satellite, and path computation does not need to be performed on each satellite for a plurality of times. Therefore, path computation frequency can be reduced, available duration of a service can be increased, and service availability can be improved. In addition, the conventional technology is a connectionless solution, and a service data packet is stored and forwarded hop by hop between satellites. However, this method is connection-oriented. Specifically, the service connection from the first satellite to the second satellite is established in advance, and then the service data packet can be transmitted on the established service connection without blocking, so that a packet loss rate of the service can be reduced, a transmission rate of the service data packet can be increased, and the service availability can also be improved.

With reference to the first aspect, in a possible implementation, a microwave apparatus of a third satellite detects that a second feeder link between the microwave apparatus of the third satellite and the gateway station is normal. The microwave apparatus of the third satellite sends second indication information to the transmission apparatus of the first satellite through a transmission apparatus of the third satellite, where the second indication information indicates that the second feeder link is normal. The transmission apparatus of the first satellite determines second path information based on the second indication information, where the second path information corresponds to a service connection from the first satellite to the third satellite. The transmission apparatus of the first satellite initiates, based on the second path information, establishment of the service connection from the first satellite to the third satellite. After the service connection from the first satellite to the third satellite is established, the transmission apparatus of the first satellite switches uplink service data from the service connection from the first satellite to the second satellite to the service connection from the first satellite to the third satellite, and the transmission apparatus of the first satellite sends a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

In the satellite communication method provided in this embodiment of this application, when the satellite directly connected to the gateway station is switched, if the microwave apparatus of the third satellite detects that the second feeder link to the gateway station is normal, the transmission apparatus of the first satellite determines the path information corresponding to the service connection from the first satellite to the third satellite, and initiates the establishment of the service connection. After the service connection is established, the uplink and downlink service data are switched. In comparison with an existing solution of path computation based on a flooding mode, in this application, the path information corresponding to the service connection to the third satellite needs to be determined only on the first satellite, and path computation does not need to be performed on each satellite for a plurality of times. Therefore, path computation frequency can be reduced, available duration of a service can be increased, and service availability can be improved. In addition, the transmission apparatus of the first satellite and the gateway station switch the service data from the service connection from the first satellite to the second satellite to the service connection from the first satellite to the third satellite only after the service connection from the first satellite to the third satellite is established, so that seamless service switching is implemented through collaboration of the first satellite, the second satellite, the third satellite, and the gateway station. In addition, connection-based transmission can greatly reduce a packet loss rate of the service in a satellite switching process.

With reference to the first aspect, in a possible implementation, that the transmission apparatus of the first satellite determines the second path information based on the second indication information includes: The transmission apparatus of the first satellite determines, based on the second indication information, preconfigured information about a path from the first satellite to the third satellite as the second path information; or the transmission apparatus of the first satellite computes the second path information based on the second indication information, topology information of a satellite network in which the first satellite and the third satellite are located, and address information of the third satellite from the third satellite. In comparison with a solution in the conventional technology in which a service data packet is stored and a path to the third satellite is computed on each satellite, in this solution, the path from the first satellite to the third satellite can be directly determined only by storing the second path information on the first satellite or computing the second path information on the first satellite once, to reduce storage and computation overheads and reduce satellite hardware burden.

With reference to the first aspect, in a possible implementation, that the transmission apparatus of the first satellite initiates, based on the second path information, the establishment of the service connection from the first satellite to the third satellite includes: The transmission apparatus of the first satellite configures a cross; and the transmission apparatus of the first satellite sends a third message to a transmission apparatus of another satellite on the path corresponding to the second path information, where the third message is used to trigger the transmission apparatus of the another satellite to configure the cross. In this solution, the cross is configured for each satellite on the path corresponding to the second path information, to establish the service connection from the first satellite to the third satellite, and prepare for service data switching.

With reference to the first aspect, in a possible implementation, after the service connection from the first satellite to the second satellite is established, the transmission apparatus of the first satellite configures a service parameter on the service connection from the first satellite to the second satellite. The service parameter is configured on the service connection from the first satellite to the second satellite, and subsequently, when service data of the terminal device arrives at the first satellite, the service data may directly arrive at the second satellite without blocking, and then arrive at the service landing gateway station.

With reference to the first aspect, in a possible implementation, that the transmission apparatus of the first satellite determines the first path information based on the first message includes: The transmission apparatus of the first satellite determines, based on the first message, preconfigured information about a path from the first satellite to the second satellite as the first path information; or the transmission apparatus of the first satellite computes the first path information based on the first message, the topology information of the satellite network in which the first satellite and the second satellite are located, and address information of the second satellite from the second satellite. In comparison with a solution in the conventional technology in which a service data packet is stored and a path to the second satellite is computed on each satellite, in this solution, the path from the first satellite to the second satellite can be directly determined only by storing the first path information on the first satellite or computing the first path information on the first satellite once, to reduce storage and computation overheads and reduce satellite hardware burden.

With reference to the first aspect, in a possible implementation, that the transmission apparatus of the first satellite initiates, based on the first path information, the establishment of the service connection from the first satellite to the second satellite includes: The transmission apparatus of the first satellite configures the cross; and the transmission apparatus of the first satellite sends a fourth message to a transmission apparatus of another satellite on the path corresponding to the first path information, where the fourth message is used to trigger the transmission apparatus of the another satellite to configure the cross. In this solution, the cross is configured for each satellite on the path corresponding to the first path information, to establish the service connection from the first satellite to the second satellite, and prepare for service data transmission.

According to a second aspect, a satellite communication method is provided. Specifically, a microwave apparatus of a third satellite detects that a second feeder link between the microwave apparatus of the third satellite and a gateway station is normal. The microwave apparatus of the third satellite sends second indication information to a transmission apparatus of a first satellite through a transmission apparatus of the third satellite, where the second indication information indicates that the second feeder link is normal. The transmission apparatus of the first satellite determines second path information based on the second indication information, where the second path information corresponds to a service connection from the first satellite to the third satellite. The transmission apparatus of the first satellite initiates, based on the second path information, establishment of the service connection from the first satellite to the third satellite. After the service connection from the first satellite to the third satellite is established, the transmission apparatus of the first satellite switches uplink service data from a service connection from the first satellite to a second satellite to the service connection from the first satellite to the third satellite, and the transmission apparatus of the first satellite sends a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite. For technical effects of the second aspect, refer to the technical effects brought by corresponding implementations of the first aspect. Details are not described herein again.

With reference to the second aspect, in a possible implementation, that the transmission apparatus of the first satellite determines the second path information based on the second indication information includes: The transmission apparatus of the first satellite determines, based on the second indication information, preconfigured information about a path from the first satellite to the third satellite as the second path information; or the transmission apparatus of the first satellite computes the second path information based on the second indication information, topology information of a satellite network in which the first satellite and the third satellite are located, and address information of the third satellite from the third satellite. For a technical effect of this implementation, refer to a technical effect brought by a corresponding implementation of the first aspect. Details are not described herein again.

With reference to the second aspect, in a possible implementation, that the transmission apparatus of the first satellite initiates, based on the second path information, the establishment of the service connection from the first satellite to the third satellite includes: The transmission apparatus of the first satellite configures a cross; and the transmission apparatus of the first satellite sends a third message to a transmission apparatus of another satellite on the path corresponding to the second path information, where the third message is used to trigger the transmission apparatus of the another satellite to configure the cross. For a technical effect of this implementation, refer to a technical effect brought by a corresponding implementation of the first aspect. Details are not described herein again.

According to a third aspect, a satellite communication method is provided. An apparatus for performing the satellite communication method may be a transmission apparatus of a first satellite, or may be a module, for example, a chip or a chip system, used in the transmission apparatus of the first satellite. The following is described by using an example in which an execution body is the transmission apparatus of the first satellite. The transmission apparatus of the first satellite receives first indication information from a transmission apparatus of a second satellite, and sends the first indication information to a microwave apparatus of the first satellite, where the first indication information indicates that a first feeder link between a microwave apparatus of the second satellite and a gateway station is normal. The transmission apparatus of the first satellite receives a first message from the microwave apparatus of the first satellite, where the first message is used to request to establish a service connection from the first satellite to the second satellite, the service connection is used for service data transmission between a terminal device and the gateway station, and the terminal device is connected to the first satellite. The transmission apparatus of the first satellite determines first path information based on the first message, where the first path information corresponds to the service connection from the first satellite to the second satellite. The transmission apparatus of the first satellite initiates, based on the first path information, establishment of the service connection from the first satellite to the second satellite.

With reference to the third aspect, in a possible implementation, the transmission apparatus of the first satellite receives second indication information from a transmission apparatus of a third satellite, where the second indication information indicates that a second feeder link between a microwave apparatus of the third satellite and the gateway station is normal. The transmission apparatus of the first satellite determines second path information based on the second indication information, where the second path information corresponds to a service connection from the first satellite to the third satellite. The transmission apparatus of the first satellite initiates, based on the second path information, establishment of the service connection from the first satellite to the third satellite. After the service connection from the first satellite to the third satellite is established, the transmission apparatus of the first satellite switches uplink service data from the service connection from the first satellite to the second satellite to the service connection from the first satellite to the third satellite. After the service connection from the first satellite to the third satellite is established, the transmission apparatus of the first satellite sends a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

With reference to the third aspect, in a possible implementation, that the transmission apparatus of the first satellite determines the second path information based on the second indication information includes: The transmission apparatus of the first satellite determines, based on the second indication information, preconfigured information about a path from the first satellite to the third satellite as the second path information; or the transmission apparatus of the first satellite computes the second path information based on the second indication information, topology information of a satellite network in which the first satellite and the third satellite are located, and address information of the third satellite from the third satellite.

With reference to the third aspect, in a possible implementation, that the transmission apparatus of the first satellite initiates, based on the second path information, the establishment of the service connection from the first satellite to the third satellite includes: The transmission apparatus of the first satellite configures a cross; and the transmission apparatus of the first satellite sends a third message to a transmission apparatus of another satellite on the path corresponding to the second path information, where the third message is used to trigger the transmission apparatus of the another satellite to configure the cross.

With reference to the third aspect, in a possible implementation, after the service connection from the first satellite to the second satellite is established, the transmission apparatus of the first satellite configures a service parameter on the service connection from the first satellite to the second satellite.

With reference to the third aspect, in a possible implementation, that the transmission apparatus of the first satellite determines the first path information based on the first message includes: The transmission apparatus of the first satellite determines, based on the first message, preconfigured information about a path from the first satellite to the second satellite as the first path information; or computes the first path information based on the first message, the topology information of the satellite network in which the first satellite and the second satellite are located, and address information of the second satellite from the second satellite.

With reference to the third aspect, in a possible implementation, that the transmission apparatus of the first satellite initiates, based on the first path information, the establishment of the service connection from the first satellite to the second satellite includes: The transmission apparatus of the first satellite configures the cross; and the transmission apparatus of the first satellite sends a fourth message to a transmission apparatus of another satellite on the path corresponding to the first path information, where the fourth message is used to trigger the transmission apparatus of the another satellite to configure the cross.

According to a fourth aspect, a satellite communication method is provided. An apparatus for performing the satellite communication method may be a transmission apparatus of a first satellite, or may be a module, for example, a chip or a chip system, used in the transmission apparatus of the first satellite. The following is described by using an example in which an execution body is the transmission apparatus of the first satellite. The transmission apparatus of the first satellite receives second indication information from a transmission apparatus of a third satellite, where the second indication information indicates that a second feeder link between a microwave apparatus of the third satellite and a gateway station is normal. The transmission apparatus of the first satellite determines second path information based on the second indication information, where the second path information corresponds to a service connection from the first satellite to the third satellite. The transmission apparatus of the first satellite initiates, based on the second path information, establishment of the service connection from the first satellite to the third satellite. After the service connection from the first satellite to the third satellite is established, the transmission apparatus of the first satellite switches uplink service data from a service connection from the first satellite to a second satellite to the service connection from the first satellite to the third satellite. After the service connection from the first satellite to the third satellite is established, the transmission apparatus of the first satellite sends a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

With reference to the fourth aspect, in a possible implementation, that the transmission apparatus of the first satellite determines the second path information based on the second indication information includes: The transmission apparatus of the first satellite determines, based on the second indication information, preconfigured information about a path from the first satellite to the third satellite as the second path information; or the transmission apparatus of the first satellite computes the second path information based on the second indication information, topology information of a satellite network in which the first satellite and the third satellite are located, and address information of the third satellite from the third satellite.

With reference to the fourth aspect, in a possible implementation, that the transmission apparatus of the first satellite initiates, based on the second path information, the establishment of the service connection from the first satellite to the third satellite includes: The transmission apparatus of the first satellite configures a cross; and the transmission apparatus of the first satellite sends a third message to a transmission apparatus of another satellite on the path corresponding to the second path information, where the third message is used to trigger the transmission apparatus of the another satellite to configure the cross.

According to a fifth aspect, a satellite communication method is provided. An apparatus for performing the satellite communication method may be a microwave apparatus of a first satellite, or may be a module, for example, a chip or a chip system, used in the microwave apparatus of the first satellite. The following is described by using an example in which an execution body is the microwave apparatus of the first satellite. The microwave apparatus of the first satellite receives first indication information from a microwave apparatus of a second satellite through a transmission apparatus of the first satellite and a transmission apparatus of the second satellite, where the first indication information indicates that a first feeder link between the microwave apparatus of the second satellite and a gateway station is normal. The microwave apparatus of the first satellite sends a first message to the transmission apparatus of the first satellite based on the first indication information, where the first message is used to request to establish a service connection from the first satellite to the second satellite, the service connection is used for service data transmission between a terminal device and the gateway station, and the terminal device is connected to the first satellite.

According to a sixth aspect, a satellite communication method is provided. An apparatus for performing the satellite communication method may be a microwave apparatus of a second satellite, or may be a module, for example, a chip or a chip system, used in the microwave apparatus of the second satellite. The following is described by using an example in which an execution body is the microwave apparatus of the second satellite. The microwave apparatus of the second satellite detects that a first feeder link between the microwave apparatus of the second satellite and a gateway station is normal. The microwave apparatus of the second satellite sends first indication information to a microwave apparatus of a first satellite through a transmission apparatus of the second satellite and a transmission apparatus of the first satellite, where the first indication information indicates that the first feeder link is normal.

According to a seventh aspect, a satellite communication method is provided. An apparatus for performing the satellite communication method may be a microwave apparatus of a third satellite, and may be a module, for example, a chip or a chip system, used in the microwave apparatus of the third satellite. The following is described by using an example in which an execution body is the microwave apparatus of the third satellite. The microwave apparatus of the third satellite detects that a second feeder link between the microwave apparatus of the third satellite and a gateway station is normal. The microwave apparatus of the third satellite sends second indication information to a microwave apparatus of a first satellite through a transmission apparatus of the third satellite and a transmission apparatus of the first satellite, where the second indication information indicates that the second feeder link is normal. The microwave apparatus of the third satellite receives, through the transmission apparatus of the third satellite, a second message from the transmission apparatus of the first satellite, and sends the second message to the gateway station, where the second message is used to request to switch downlink service data from a service connection from the first satellite to a second satellite to a service connection from the first satellite to the third satellite.

According to an eighth aspect, a transmission apparatus of a first satellite is provided, to implement the foregoing methods. The transmission apparatus of the first satellite includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the eighth aspect, in a possible implementation, the transmission apparatus of the first satellite includes a processor and an optical transceiver module. The optical transceiver module is configured to: receive first indication information from a transmission apparatus of a second satellite, and send the first indication information to a microwave apparatus of the first satellite, where the first indication information indicates that a first feeder link between a microwave apparatus of the second satellite and a gateway station is normal. The optical transceiver module is further configured to receive a first message from the microwave apparatus of the first satellite, where the first message is used to request to establish a service connection from the first satellite to the second satellite, the service connection is used for service data transmission between a terminal device and the gateway station, and the terminal device is connected to the first satellite. The processor is configured to determine first path information based on the first message, where the first path information corresponds to the service connection from the first satellite to the second satellite. The processor is further configured to initiate, based on the first path information, establishment of the service connection from the first satellite to the second satellite.

With reference to the eighth aspect, in a possible implementation, the optical transceiver module is further configured to receive second indication information from a transmission apparatus of a third satellite, where the second indication information indicates that a second feeder link between a microwave apparatus of the third satellite and the gateway station is normal. The processor is further configured to determine second path information based on the second indication information, where the second path information corresponds to a service connection from the first satellite to the third satellite. The processor is further configured to initiate, based on the second path information, establishment of the service connection from the first satellite to the third satellite. The processor is further configured to: after the service connection from the first satellite to the third satellite is established, switch uplink service data from the service connection from the first satellite to the second satellite to the service connection from the first satellite to the third satellite. The optical transceiver module is further configured to: after the service connection from the first satellite to the third satellite is established, send a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

With reference to the eighth aspect, in a possible implementation, that the processor is further configured to determine the second path information based on the second indication information includes: being configured to: determine, based on the second indication information, preconfigured information about a path from the first satellite to the third satellite as the second path information; or compute the second path information based on the second indication information, topology information of a satellite network in which the first satellite and the third satellite are located, and address information of the third satellite from the third satellite.

With reference to the eighth aspect, in a possible implementation, that the processor is further configured to initiate, based on the second path information, the establishment of the service connection from the first satellite to the third satellite includes: being configured to: configure a cross; and send a third message to a transmission apparatus of another satellite on the path corresponding to the second path information, where the third message is used to trigger the transmission apparatus of the another satellite to configure the cross.

With reference to the eighth aspect, in a possible implementation, the processor is further configured to: after the service connection from the first satellite to the second satellite is established, configure a service parameter on the service connection from the first satellite to the second satellite.

With reference to the eighth aspect, in a possible implementation, that the processor is configured to determine the first path information based on the first message includes: being configured to: determine, based on the first message, preconfigured information about a path from the first satellite to the second satellite as the first path information; or compute the first path information based on the first message, the topology information of the satellite network in which the first satellite and the second satellite are located, and address information of the second satellite from the second satellite.

With reference to the eighth aspect, in a possible implementation, that the processor is further configured to initiate, based on the first path information, the establishment of the service connection from the first satellite to the second satellite includes: being configured to: configure the cross; and send a fourth message to a transmission apparatus of another satellite on the path corresponding to the first path information, where the fourth message is used to trigger the transmission apparatus of the another satellite to configure the cross.

According to a ninth aspect, a transmission apparatus of a first satellite is provided, to implement the foregoing methods. The transmission apparatus of the first satellite includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the ninth aspect, in a possible implementation, the transmission apparatus of the first satellite includes a processor and an optical transceiver module. The optical transceiver module is configured to receive second indication information from a transmission apparatus of a third satellite, where the second indication information indicates that a second feeder link between a microwave apparatus of the third satellite and a gateway station is normal. The processor is configured to determine second path information based on the second indication information, where the second path information corresponds to a service connection from the first satellite to the third satellite. The processor is further configured to initiate, based on the second path information, establishment of the service connection from the first satellite to the third satellite. The processor is further configured to: after the service connection from the first satellite to the third satellite is established, switch uplink service data from a service connection from the first satellite to a second satellite to the service connection from the first satellite to the third satellite. The optical transceiver module is further configured to: after the service connection from the first satellite to the third satellite is established, send a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

With reference to the ninth aspect, in a possible implementation, that the processor is further configured to determine the second path information based on the second indication information includes: being configured to: determine, based on the second indication information, preconfigured information about a path from the first satellite to the third satellite as the second path information; or compute the second path information based on the second indication information, topology information of a satellite network in which the first satellite and the third satellite are located, and address information of the third satellite from the third satellite.

With reference to the ninth aspect, in a possible implementation, that the processor is further configured to initiate, based on the second path information, the establishment of the service connection from the first satellite to the third satellite includes: being configured to: configure a cross; and send a third message to a transmission apparatus of another satellite on the path corresponding to the second path information, where the third message is used to trigger the transmission apparatus of the another satellite to configure the cross.

According to a tenth aspect, a microwave apparatus of a first satellite is provided, to implement the foregoing methods. The microwave apparatus of the first satellite includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the tenth aspect, in a possible implementation, the microwave apparatus of the first satellite includes a microwave transceiver module. The microwave transceiver module is configured to receive first indication information from a microwave apparatus of a second satellite through a transmission apparatus of the first satellite and a transmission apparatus of the second satellite, where the first indication information indicates that a first feeder link between the microwave apparatus of the second satellite and a gateway station is normal. The microwave transceiver module is further configured to send a first message to the transmission apparatus of the first satellite based on the first indication information, where the first message is used to request to establish a service connection from the first satellite to the second satellite, the service connection is used for service data transmission between a terminal device and the gateway station, and the terminal device is connected to the first satellite.

According to an eleventh aspect, a microwave apparatus of a second satellite is provided, to implement the foregoing methods. The microwave apparatus of the second satellite includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the eleventh aspect, in a possible implementation, the microwave apparatus of the second satellite includes a processor and a microwave transceiver module. The processor is configured to detect that a first feeder link between the microwave apparatus of the second satellite and a gateway station is normal. The microwave transceiver module is configured to send first indication information to a microwave apparatus of a first satellite through a transmission apparatus of the second satellite and a transmission apparatus of the first satellite, where the first indication information indicates that the first feeder link is normal.

According to a twelfth aspect, a microwave apparatus of a third satellite is provided, to implement the foregoing methods. The microwave apparatus of the third satellite includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the twelfth aspect, in a possible implementation, the microwave apparatus of the third satellite includes a processor and a microwave transceiver module. The processor is configured to detect that a second feeder link between the microwave apparatus of the third satellite and a gateway station is normal. The microwave transceiver module is configured to send second indication information to a microwave apparatus of a first satellite through a transmission apparatus of the third satellite and a transmission apparatus of the first satellite, where the second indication information indicates that the second feeder link is normal. The microwave transceiver module is further configured to: receive, through the transmission apparatus of the third satellite, a second message from the transmission apparatus of the first satellite, and send the second message to the gateway station, where the second message is used to request to switch downlink service data from a service connection from the first satellite to a second satellite to a service connection from the first satellite to the third satellite.

According to a thirteenth aspect, a communication system is provided. The communication system includes a microwave apparatus of a second satellite, a transmission apparatus of the second satellite, a microwave apparatus of a first satellite, and a transmission apparatus of the first satellite. The microwave apparatus of the second satellite is configured to: after detecting that a first feeder link between the microwave apparatus of the second satellite and a gateway station is normal, send first indication information to the microwave apparatus of the first satellite through the transmission apparatus of the second satellite and the transmission apparatus of the first satellite, where the first indication information indicates that the first feeder link is normal. The microwave apparatus of the first satellite is configured to send a first message to the transmission apparatus of the first satellite based on the first indication information, where the first message is used to request to establish a service connection from the first satellite to the second satellite, the service connection is used for service data transmission between a terminal device and the gateway station, and the terminal device is connected to the first satellite. The transmission apparatus of the first satellite is configured to: determine first path information based on the first message, and initiate, based on the first path information, establishment of the service connection from the first satellite to the second satellite, where the first path information corresponds to the service connection from the first satellite to the second satellite.

With reference to the thirteenth aspect, in a possible implementation, the communication system further includes a microwave apparatus of a third satellite and a transmission apparatus of the third satellite. The microwave apparatus of the third satellite is configured to detect that a second feeder link between the microwave apparatus of the third satellite and the gateway station is normal. The microwave apparatus of the third satellite is further configured to send second indication information to the transmission apparatus of the first satellite through the transmission apparatus of the third satellite, where the second indication information indicates that the second feeder link is normal. The transmission apparatus of the first satellite is further configured to determine second path information based on the second indication information, where the second path information corresponds to a service connection from the first satellite to the third satellite. The transmission apparatus of the first satellite is further configured to initiate, based on the second path information, establishment of the service connection from the first satellite to the third satellite. The transmission apparatus of the first satellite is further configured to: after the service connection from the first satellite to the third satellite is established, switch uplink service data from the service connection from the first satellite to the second satellite to the service connection from the first satellite to the third satellite. The transmission apparatus of the first satellite is further configured to: after the service connection from the first satellite to the third satellite is established, send a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

With reference to the thirteenth aspect, in a possible implementation, that the transmission apparatus of the first satellite is further configured to determine the second path information based on the second indication information includes: being configured to: determine, based on the second indication information, preconfigured information about a path from the first satellite to the third satellite as the second path information; or compute the second path information based on the second indication information, topology information of a satellite network in which the first satellite and the third satellite are located, and address information of the third satellite from the third satellite.

With reference to the thirteenth aspect, in a possible implementation, that the transmission apparatus of the first satellite is further configured to initiate, based on the second path information, the establishment of the service connection from the first satellite to the third satellite includes: being configured to: configure a cross; and send a third message to a transmission apparatus of another satellite on the path corresponding to the second path information, where the third message is used to trigger the transmission apparatus of the another satellite to configure the cross.

With reference to the thirteenth aspect, in a possible implementation, the transmission apparatus of the first satellite is further configured to: after the service connection from the first satellite to the second satellite is established, configure a service parameter on the service connection from the first satellite to the second satellite.

With reference to the thirteenth aspect, in a possible implementation, that the transmission apparatus of the first satellite is configured to determine the first path information based on the first message includes: being configured to: determine, based on the first message, preconfigured information about a path from the first satellite to the second satellite as the first path information; or compute the first path information based on the first message, the topology information of the satellite network in which the first satellite and the second satellite are located, and address information of the second satellite from the second satellite.

With reference to the thirteenth aspect, in a possible implementation, that the transmission apparatus of the first satellite is configured to initiate, based on the first path information, the establishment of the service connection from the first satellite to the second satellite includes: being configured to: configure the cross; and send a fourth message to a transmission apparatus of another satellite on the path corresponding to the first path information, where the fourth message is used to trigger the transmission apparatus of the another satellite to configure the cross.

According to a fourteenth aspect, a communication system is provided. The communication system includes a microwave apparatus of a third satellite, a transmission apparatus of the third satellite, and a transmission apparatus of a first satellite. The microwave apparatus of the third satellite is configured to: after detecting that a second feeder link between the microwave apparatus of the third satellite and a gateway station is normal, send second indication information to the transmission apparatus of the first satellite through the transmission apparatus of the third satellite, where the second indication information indicates that the second feeder link is normal. The transmission apparatus of the first satellite is configured to determine second path information based on the second indication information, where the second path information corresponds to a service connection from the first satellite to the third satellite. The transmission apparatus of the first satellite is further configured to initiate, based on the second path information, establishment of the service connection from the first satellite to the third satellite. After the service connection from the first satellite to the third satellite is established, the transmission apparatus of the first satellite is further configured to: switch uplink service data from a service connection from the first satellite to a second satellite to the service connection from the first satellite to the third satellite; and send a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

With reference to the fourteenth aspect, in a possible implementation, that the transmission apparatus of the first satellite is configured to determine the second path information based on the second indication information includes: being configured to: determine, based on the second indication information, preconfigured information about a path from the first satellite to the third satellite as the second path information; or compute the second path information based on the second indication information, topology information of a satellite network in which the first satellite and the third satellite are located, and address information of the third satellite from the third satellite.

With reference to the fourteenth aspect, in a possible implementation, that the transmission apparatus of the first satellite is further configured to initiate, based on the second path information, the establishment of the service connection from the first satellite to the third satellite includes: being configured to: configure the cross; and send a third message to a transmission apparatus of another satellite on the path corresponding to the second path information, where the third message is used to trigger the transmission apparatus of the another satellite to configure the cross.

For technical effects brought by any possible implementation in the third aspect to the fourteenth aspect, refer to technical effects brought by different implementations in the first aspect. Details are not described herein again.

### BRIEF DESCRIPTION OF DRAWINGS

FIG. 1 is a schematic diagram of an architecture of satellite networking in a conventional technology;
FIG. 2 is a schematic diagram of a process of transmitting service data in a conventional technology;
FIG. 3 is a schematic diagram of a process of transmitting service data when a satellite directly connected to a gateway station is switched in a conventional technology;
FIG. 4 is a schematic diagram of an architecture of a communication system according to an embodiment of this application;
FIG. 5 is a schematic diagram of an architecture of another communication system according to an embodiment of this application;
FIG. 6 is a flowchart of a satellite communication method according to an embodiment of this application;
FIG. 7 is a schematic diagram of an architecture of still another communication system according to an embodiment of this application;
FIG. 8 is a flowchart of another satellite communication method according to an embodiment of this application;
FIG. 9 is a schematic diagram of a structure of a transmission apparatus according to an embodiment of this application; and
FIG. 10 is a schematic diagram of a structure of a microwave apparatus according to an embodiment of this application.

### DESCRIPTION OF EMBODIMENTS

For ease of understanding of technical solutions in embodiments of this application, technologies or terms related to this application are first briefly described.

First, characteristics of an inter-satellite link and a feeder link are described.

A characteristic of the inter-satellite link is that a topology structure is stable, and each satellite is connected to four inter-satellite links. Among the four inter-satellite links, two links are intra-orbit inter-satellite links, and the other two links are inter-orbit inter-satellite links. The foregoing intra-orbit inter-satellite link is configured to connect two satellites in a same orbit, and the inter-orbit inter-satellite link is configured to connect two satellites in different orbits. For example, as shown in FIG. 2, a satellite 4 in an orbit 3 is used as an example, and is separately connected to a satellite 3 in the orbit 3, a satellite 5 in the orbit 3, a satellite 4 in an orbit 2, and a satellite 4 in an orbit 4. An inter-satellite link between the satellite 4 in the orbit 3 and the satellite 3 in the orbit 3 and an inter-satellite link between the satellite 4 in the orbit 3 and the satellite 5 in the orbit 3 are both intra-orbit inter-satellite links. An inter-satellite link between the satellite 4 in the orbit 3 and the satellite 4 in the orbit 2 and an inter-satellite link between the satellite 4 in the orbit 3 and the satellite 4 in the orbit 4 are both inter-orbit inter-satellite links.

Another characteristic of the inter-satellite link is that two satellite orbits may not be on a same plane. Therefore, a distance between inter-orbit inter-satellite links may change periodically with periodic movement of the satellites. A characteristic of the feeder link is that a connection between a satellite and a gateway station is periodic, and time for each connection is short, usually tens of seconds to several minutes. Another characteristic of the feeder link is that the gateway station can be connected to a plurality of satellites simultaneously, usually two satellites to 12 satellites.

Second, in a conventional technology, a service transmission solution when a satellite at one end of the feeder link is switched is described.

In a satellite communication scenario, the satellite continuously moves at a high speed, causing a highly dynamic connection of a satellite network. As shown in FIG. 3, at a moment T1, the gateway station is directly connected to a satellite 5 in the orbit 4, and a terminal device or another satellite communicates with the gateway station through the satellite 5 in the orbit 4. However, at a moment T2, the satellite directly connected to the gateway station is switched to a satellite 4 in an orbit 5. In this case, the terminal device or another satellite needs to communicate with the gateway station through the satellite 4 in the orbit 5. In other words, a path from the terminal device or another satellite to the gateway station changes. For ease of description, it is assumed that the gateway station is connected to only one satellite in the above descriptions. However, in the actual satellite network, the gateway station is usually connected to a plurality of satellites simultaneously.

In the foregoing path change process, in the conventional technology, after the switching, the satellite directly connected to the gateway station publishes path information in a flooding mode. In other words, the satellite sends the path information to other satellites hop by hop. Specifically, the satellite first sends the path information to each adjacent satellite of the satellite, and then each adjacent satellite forwards the path information to another adjacent satellite of the satellite other than the satellite that sends the path information to the satellite, to implement a cycle. After receiving the path information, the another satellite computes, based on the received path information, a path to the satellite directly connected to the gateway station.

However, path computation in this solution is frequent, and in particular, when there are a large quantity of satellites, service availability duration is short, and service availability is low. Table 1 shows a percentage of available duration under a condition of different quantities of satellites. Data in Table 1 is obtained according to the open shortest path first (open shortest path first, OSPF) protocol.

**Table 1**

| Satellite quantity | Path update frequency | Percentage of available duration |
|---|---|---|
| 82 | 430 | 9.97% |
| 106 | 665 | 8.67% |
| 130 | 884 | 7.50% |
| 154 | 1086 | 7.14% |
| 178 | 1293 | 6.53% |

The following describes the technical solutions in embodiments of this application with reference to the accompanying drawings in embodiments of this application. In the descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, in the descriptions of this application, "a plurality of' means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity and an execution sequence, and the terms such as "first" and "second" do not indicate a definite difference. In addition, in embodiments of this application, the word such as "example" or "for example" represents giving an example, an illustration, or descriptions. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

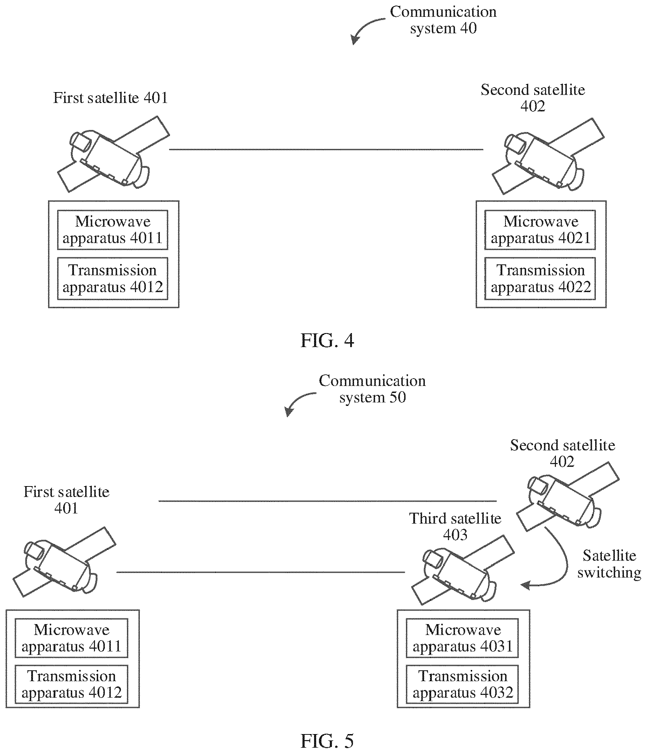

FIG. 4 shows a communication system 40 according to an embodiment of this application. As shown in FIG. 4, the communication system 40 includes a first satellite 401 and a second satellite 402. The first satellite 401 includes a microwave apparatus 4011 and a transmission apparatus 4012, and the second satellite 402 includes a microwave apparatus 4021 and a transmission apparatus 4022. The first satellite 401 is connected to a terminal device, and the second satellite 402 is connected to a gateway station. Because this embodiment of this application does not relate to interaction between the first satellite 401 and the terminal device, and does not relate to interaction between the second satellite 402 and the gateway station, FIG. 4 does not show the terminal device and the gateway station. It should be noted that, one or more satellites may further exist between the first satellite 401 and the second satellite 402, and the one or more satellites each include a microwave apparatus and a transmission apparatus, though this is not shown in the figure.

For example, the first satellite 401 in FIG. 4 may be a satellite 1 in an orbit 1 in FIG. 2, and the second satellite 402 in FIG. 4 may be a satellite 5 in an orbit 4 in FIG. 2.

In FIG. 4, the microwave apparatus 4021 of the second satellite is configured to detect that a first feeder link between the microwave apparatus 4021 of the second satellite and the gateway station is normal. The microwave apparatus 4021 of the second satellite is further configured to send first indication information to the microwave apparatus 4011 of the first satellite through the transmission apparatus 4022 of the second satellite and the transmission apparatus 4012 of the first satellite, where the first indication information indicates that the first feeder link is normal. The microwave apparatus 4011 of the first satellite is configured to receive the first indication information from the microwave apparatus 4021 of the second satellite through the transmission apparatus 4012 of the first satellite and the transmission apparatus 4022 of the second satellite. The microwave apparatus 4011 of the first satellite is further configured to send a first message to the transmission apparatus 4012 of the first satellite based on the first indication information, where the first message is used to request to establish a service connection from the first satellite 401 to the second satellite 402, the service connection is used for service data transmission between the terminal device and the gateway station, and the terminal device is connected to the first satellite 401. The transmission apparatus 4012 of the first satellite is configured to receive the first message from the microwave apparatus 4011 of the first satellite. The transmission apparatus 4012 of the first satellite is further configured to determine first path information based on the first message, where the first path information corresponds to the service connection from the first satellite 401 to the second satellite 402. The transmission apparatus 4012 of the first satellite is further configured to initiate, based on the first path information, establishment of the service connection from the first satellite 401 to the second satellite 402. Specific implementations and technical effects of the solution are described in detail in subsequent method embodiments, and details are not described herein again.

FIG. 5 shows another communication system 50 according to an embodiment of this application. As shown in FIG. 5, the communication system 50 includes a first satellite 401, a second satellite 402, and a third satellite 403. The first satellite 401 includes a microwave apparatus 4011 and a transmission apparatus 4012, and the third satellite 403 includes a microwave apparatus 4031 and a transmission apparatus 4032. The second satellite 402 includes a microwave apparatus 4021 and a transmission apparatus 4022, though this is not shown in the figure. The first satellite 401 is connected to a terminal device, a satellite connected to a gateway station is switched from the second satellite 402 to the third satellite, and a connection between the second satellite 402 and the gateway station and a connection between the first satellite 401 and the second satellite 402 may still be used. Because this embodiment of this application does not relate to interaction between the first satellite 401 and the terminal device, and does not relate to interaction between the second satellite 402 and the gateway station or between the third satellite 403 and the gateway station, FIG. 4 does not show the terminal device and the gateway station. It should be noted that, one or more satellites may further exist between the first satellite 401 and the third satellite 403, and the one or more satellites each include a microwave apparatus and a transmission apparatus, though this is not shown in the figure.

The microwave apparatus 4031 of the third satellite is configured to detect that a second feeder link between the microwave apparatus 4031 of the third satellite and the gateway station is normal. The microwave apparatus 4031 of the third satellite is further configured to send second indication information to the transmission apparatus 4012 of the first satellite through the transmission apparatus 4032 of the third satellite, where the second indication information indicates that the second feeder link is normal. The transmission apparatus 4012 of the first satellite is configured to receive the second indication information from the microwave apparatus 4031 of the third satellite through the transmission apparatus 4032 of the third satellite. The transmission apparatus 4012 of the first satellite is further configured to determine second path information based on the second indication information, where the second path information corresponds to a service connection from the first satellite 401 to the third satellite 403. The transmission apparatus 4012 of the first satellite is further configured to initiate, based on the second path information, establishment of the service connection from the first satellite 401 to the third satellite 403. After the service connection from the first satellite 401 to the third satellite 403 is established, the transmission apparatus 4012 of the first satellite is further configured to switch uplink service data from a service connection from the first satellite 401 to the second satellite 402 to the service connection from the first satellite 401 to the third satellite 403, and is further configured to send a second message to the gateway station through the transmission apparatus 4032 of the third satellite and the microwave apparatus 4031 of the third satellite, where the second message is used to request to switch downlink service data from the service connection from the first satellite 401 to the second satellite 402 to the service connection from the first satellite 401 to the third satellite 403. Specific implementations and technical effects of the solution are described in detail in subsequent method embodiments, and details are not described herein again.

The following describes in detail satellite communication methods provided in embodiments of this application with reference to FIG. 1 to FIG. 5.

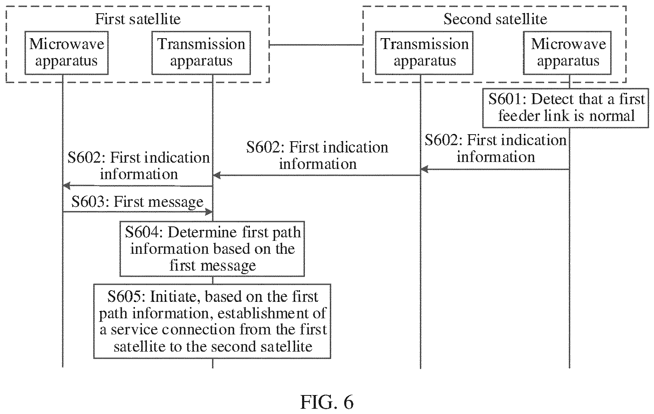

With reference to the communication system 40 shown in FIG. 4, FIG. 6 shows a satellite communication method according to an embodiment of this application. The satellite communication method includes the following steps.

S601: A microwave apparatus of a second satellite detects that a first feeder link between the microwave apparatus of the second satellite and a gateway station is normal.

S602: The microwave apparatus of the second satellite sends first indication information to a microwave apparatus of a first satellite through a transmission apparatus of the second satellite and a transmission apparatus of the first satellite. Correspondingly, the microwave apparatus of the first satellite receives the first indication information from the microwave apparatus of the second satellite through the transmission apparatus of the first satellite and the transmission apparatus of the second satellite. The first indication information indicates that the first feeder link is normal.

In this embodiment of this application, each satellite may include a transmission apparatus and a microwave apparatus, a terminal device may include a microwave apparatus, and the gateway station may include a microwave apparatus. The transmission apparatus may be an optical transmission apparatus, and is configured to implement communication between satellites. The microwave apparatus is configured to implement communication between the satellite and the terminal device or the gateway station.

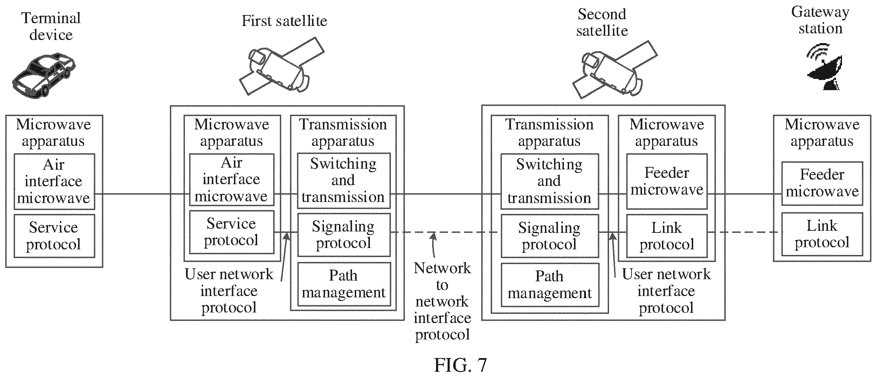

For example, as shown in FIG. 7, the transmission apparatus of the satellite may include a switching and transmission apparatus, a path management apparatus, and a signaling protocol apparatus. The switching and transmission apparatus is a hardware apparatus, and the path management apparatus and the signaling protocol apparatus are software apparatuses. Specifically, the switching and transmission apparatus is configured to implement a laser connection between satellites. The path management apparatus is configured to manage path information corresponding to a service connection, where the path information corresponding to the service connection may be computed by the path management apparatus in real time, or may be preconfigured in the path management apparatus. The signaling protocol apparatus may include a user network interface protocol and a network to network interface protocol. The user network interface protocol is used for interconnection with a service protocol apparatus or a link protocol apparatus of the microwave apparatus in the satellite, and the network to network interface protocol is used for interconnection with a signaling protocol apparatus of another satellite. For functions of the service protocol apparatus and the link protocol apparatus of the microwave apparatus, refer to the following example of composition of the microwave apparatus of the satellite, and details are not described herein again.

It should be noted that, in this embodiment of this application, a connection between the satellites, a connection between the satellite and the terminal device, and a connection between the satellite and the terminal station are all wireless connections.

For example, as shown in FIG. 7, in this embodiment of this application, the microwave apparatus may include an air interface microwave apparatus, a service protocol apparatus, a feeder microwave apparatus, and a link protocol apparatus. The air interface microwave apparatus and the service protocol apparatus are configured to implement the communication between the satellite and the terminal device, and the feeder microwave apparatus and the link protocol apparatus are configured to implement the communication between the satellite and the gateway station. The air interface microwave apparatus and the feeder microwave apparatus are hardware apparatuses, and the service protocol apparatus and the link protocol apparatus are software apparatuses. Specifically, when implementing a microwave connection to the terminal device, the air interface microwave apparatus of the satellite may also be connected to the switching and transmission apparatus of the transmission apparatus through an electrical port or an optical port inside the satellite. When implementing a microwave connection to the gateway station, the feeder microwave apparatus of the satellite may also be connected to the switching and transmission apparatus of the transmission apparatus through the electrical port or the optical port inside the satellite. The service protocol apparatus is configured to control a service between the service protocol apparatus and the terminal device, including identifying an address of a gateway station responsible for processing the service and forwarding service data to the gateway station. The link protocol apparatus is configured to implement discovery and status detection of a feeder link.

It should be noted that, because the first satellite is connected to the terminal device, FIG. 7 shows only that the microwave apparatus of the first satellite includes an air interface microwave apparatus and a service protocol apparatus that are configured to communicate with the terminal device. Actually, the microwave apparatus of the first satellite further includes a feeder microwave apparatus and a link protocol apparatus. Similarly, because the second satellite is connected to the gateway station, FIG. 7 shows only that the microwave apparatus of the second satellite includes a feeder microwave apparatus and a link protocol apparatus that are configured to communicate with the gateway station. Actually, the microwave apparatus of the second satellite further includes an air interface microwave apparatus and a service protocol apparatus.

For example, with reference to FIG. 7, the foregoing step S601 may be performed by the link protocol apparatus of the microwave apparatus of the second satellite, and the first indication information in the foregoing step S602 may be sent by the link protocol apparatus of the microwave apparatus of the second satellite to the service protocol apparatus of the microwave apparatus of the first satellite through a signaling protocol apparatus of the transmission apparatus of the second satellite and a signaling protocol apparatus of the transmission apparatus of the first satellite.

S603: The microwave apparatus of the first satellite sends a first message to the transmission apparatus of the first satellite. Correspondingly, the transmission apparatus of the first satellite receives the first message from the microwave apparatus of the first satellite. The first message is used to request to establish a service connection from the first satellite to the second satellite, the service connection is used for service data transmission between the terminal device and the gateway station, and the terminal device is connected to the first satellite.

In this embodiment of this application, the first message can trigger a service connection establishment procedure. To ensure normal transmission of service data, the service connection establishment procedure needs to be triggered in advance. Advance time is determined by the microwave apparatus of the first satellite according to a preconfigured service policy when the microwave apparatus of the first satellite receives the first indication information.

Optionally, the first message may include an address of a service landing gateway station, where the service landing gateway station refers to a gateway station responsible for processing the service.

For example, with reference to FIG. 7, the first message in the step S603 may be sent by the service protocol apparatus of the microwave apparatus of the first satellite to the signaling protocol apparatus of the transmission apparatus of the first satellite.

S604: The transmission apparatus of the first satellite determines first path information based on the first message, where the first path information corresponds to the service connection from the first satellite to the second satellite.

In this embodiment of this application, the path information may be, for example, a list of satellites and inter-satellite links that the corresponding service connection passes through.

Optionally, that the transmission apparatus of the first satellite determines the first path information based on the first message includes: The transmission apparatus of the first satellite determines, based on the first message, preconfigured information about a path from the first satellite to the second satellite as the first path information; or the transmission apparatus of the first satellite computes the first path information based on the first message, topology information of a satellite network in which the first satellite and the second satellite are located, and address information of the second satellite from the second satellite. In comparison with a solution in a conventional technology in which a service data packet is stored and a path to the second satellite is computed on each satellite, in this solution, the path from the first satellite to the second satellite can be directly determined only by storing the first path information on the first satellite or computing the first path information on the first satellite once, to reduce storage and computation overheads and reduce satellite hardware burden.

In this embodiment of this application, although the topology information includes the address information of the second satellite, the second satellite may still notify the first satellite of the address information of the second satellite in a broadcast manner, to indicate the satellite currently connected to the gateway station, that is, the second satellite, so that the first satellite is connected to the gateway station by using the notified address of the second satellite.

For example, with reference to FIG. 7, the step S604 may be implemented by the signaling protocol apparatus of the transmission apparatus of the first satellite by querying the path management apparatus for the first path information.

S605: The transmission apparatus of the first satellite initiates, based on the first path information, establishment of the service connection from the first satellite to the second satellite.

Optionally, that the transmission apparatus of the first satellite initiates, based on the first path information, the establishment of the service connection from the first satellite to the second satellite includes: The transmission apparatus of the first satellite configures a cross; and the transmission apparatus of the first satellite sends a fourth message to a transmission apparatus of another satellite on the path corresponding to the first path information, where the fourth message is used to trigger the transmission apparatus of the another satellite to configure the cross. In this solution, the cross is configured for each satellite on the path corresponding to the first path information, to establish the service connection from the first satellite to the second satellite, and prepare for service data transmission.

In this embodiment of this application, configuring the cross means that software performs configuration for hardware. Specifically, configured content includes a label of a physical port, connection bandwidth, a label used for the cross, and the like. The cross may be understood as a cross-connection (cross-connection).

In this embodiment of this application, the transmission apparatus of the first satellite may send the fourth message to a transmission apparatus of an adjacent satellite on the path corresponding to the first path information, or the transmission apparatus of the first satellite directly sends the fourth message to transmission apparatuses of all satellites except the first satellite on the path corresponding to the first path information. This is not limited in this application.

For example, with reference to FIG. 7, that the transmission apparatus of the first satellite configures the cross may be understood as that the signaling protocol apparatus of the transmission apparatus of the first satellite configures the cross for a switching and transmission apparatus. The signaling protocol apparatus of the transmission apparatus of the first satellite further sends the fourth message to a signaling protocol apparatus of a transmission apparatus of another satellite on the path corresponding to the first path information. After receiving the fourth message, the signaling protocol apparatus of the transmission apparatus of the another satellite configures the cross for a respective switching and transmission apparatus.

Optionally, the satellite communication method provided in this embodiment of this application further includes: After the service connection from the first satellite to the second satellite is established, the transmission apparatus of the first satellite configures a service parameter on the service connection from the first satellite to the second satellite. The service parameter is configured on the service connection from the first satellite to the second satellite, and subsequently, when service data of the terminal device arrives at the first satellite, the service data may directly arrive at the second satellite without blocking, and then arrive at the service landing gateway station.

For example, the service parameter includes at least one of a virtual local area network (virtual local area network, VLAN) identifier (identity, ID) or a bandwidth parameter.

In this embodiment of this application, the transmission apparatus of the first satellite configures an uplink service parameter, and a downlink service parameter may be configured by the transmission apparatus of the second satellite. Uplink refers to a direction from the terminal device to the gateway station, and downlink refers to a direction from the gateway station to the terminal device.

For example, with reference to FIG. 7, the signaling protocol apparatus of the transmission apparatus of the first satellite may configure the service parameter on the service connection from the first satellite to the second satellite.

In the satellite communication method provided in this embodiment of this application, when the microwave apparatus of the second satellite detects that the first feeder link to the gateway station is normal, after receiving a request for establishing the service connection from the first satellite to the second satellite, the transmission apparatus of the first satellite determines the path information corresponding to the service connection, and initiates the establishment of the service connection. In comparison with the conventional technology, in this application, the path information corresponding to the service connection to the second satellite needs to be determined only on the first satellite, and path computation does not need to be performed on each satellite for a plurality of times. Therefore, path computation frequency can be reduced, available duration of a service can be increased, and service availability can be improved. In addition, the conventional technology is a connectionless solution, and a service data packet is stored and forwarded hop by hop between satellites. However, this method is connection-oriented. Specifically, the service connection from the first satellite to the second satellite is established in advance, and then the service data packet can be transmitted on the established service connection without blocking, so that a packet loss rate of the service can be reduced, a transmission rate of the service data packet can be increased, and the service availability can also be improved.

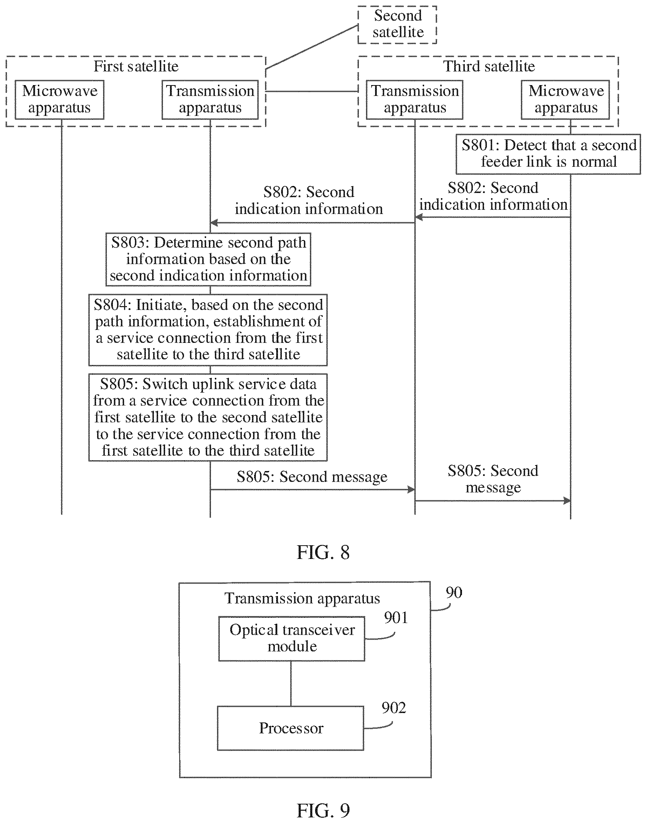

With reference to the communication system 50 shown in FIG. 5, FIG. 8 shows another satellite communication method according to an embodiment of this application. The satellite communication method includes the following steps.

S801: A microwave apparatus of a third satellite detects that a second feeder link between the microwave apparatus of the third satellite and a gateway station is normal.

For example, the step S801 may be performed by a link protocol apparatus of the microwave apparatus of the third satellite.

S802: The microwave apparatus of the third satellite sends second indication information to a transmission apparatus of a first satellite through a transmission apparatus of the third satellite. Correspondingly, the transmission apparatus of the first satellite receives the second indication information from the microwave apparatus of the third satellite through the transmission apparatus of the third satellite. The second indication information indicates that the second feeder link is normal.

In this embodiment of this application, the second indication information is sent by the third satellite to the first satellite, and the third satellite is directly connected to the gateway station. Alternatively, the second indication information may be sent by the third satellite to each satellite in a satellite network, or the second indication information may be sent by the third satellite to each satellite that lands at the gateway station. The satellite that lands at the gate station may be understood as a satellite managed by the gateway station, or a satellite that can be directly connected to the gateway station.

For example, the second indication information in the step S802 may be sent by the link protocol apparatus of the microwave apparatus of the third satellite to a signaling protocol apparatus of the transmission apparatus of the first satellite through a signaling protocol apparatus of the transmission apparatus of the third satellite.

S803: The transmission apparatus of the first satellite determines second path information based on the second indication information, where the second path information corresponds to a service connection from the first satellite to the third satellite.

Optionally, that the transmission apparatus of the first satellite determines the second path information based on the second indication information includes: The transmission apparatus of the first satellite determines, based on the second indication information, preconfigured information about a path from the first satellite to the third satellite as the second path information; or the transmission apparatus of the first satellite computes the second path information based on the second indication information, topology information of the satellite network in which the first satellite and the third satellite are located, and address information of the third satellite from the third satellite. In comparison with a solution in a conventional technology in which a service data packet is stored and a path to the third satellite is computed on each satellite, in this solution, the path from the first satellite to the third satellite can be directly determined only by storing the second path information on the first satellite or computing the second path information on the first satellite once, to reduce storage and computation overheads and reduce satellite hardware burden.

In this embodiment of this application, the third satellite may notify the first satellite of the address information of the third satellite in a broadcast manner.

For example, the step S803 may be implemented by the signaling protocol apparatus of the transmission apparatus of the first satellite by querying a path management apparatus for the second path information.

S804: The transmission apparatus of the first satellite initiates, based on the second path information, establishment of the service connection from the first satellite to the third satellite.

Optionally, that the transmission apparatus of the first satellite initiates, based on the second path information, the establishment of the service connection from the first satellite to the third satellite includes: The transmission apparatus of the first satellite configures a cross; and the transmission apparatus of the first satellite sends a third message to a transmission apparatus of another satellite on the path corresponding to the second path information, where the third message is used to trigger the transmission apparatus of the another satellite to configure the cross. In this solution, the cross is configured for each satellite on the path corresponding to the second path information, to establish the service connection from the first satellite to the third satellite, and prepare for service data switching.

For related descriptions of the cross, refer to the text descriptions of the step S605. Details are not described herein again.

S805: After the service connection from the first satellite to the third satellite is established, the transmission apparatus of the first satellite switches uplink service data from a service connection from the first satellite to a second satellite to the service connection from the first satellite to the third satellite; and the transmission apparatus of the first satellite sends a second message to the gateway station through the transmission apparatus of the third satellite and the microwave apparatus of the third satellite, where the second message is used to request to switch downlink service data from the service connection from the first satellite to the second satellite to the service connection from the first satellite to the third satellite.

For example, the switching of the uplink service data may be performed by the signaling protocol apparatus of the transmission apparatus of the first satellite.

It should be noted that the switching of the downlink service data is completed inside the gateway station, and this application does not relate to a specific implementation of the switching inside the gateway station.

In the satellite communication method provided in this embodiment of this application, when the satellite directly connected to the gateway station is switched, if the microwave apparatus of the third satellite detects that the second feeder link to the gateway station is normal, the transmission apparatus of the first satellite determines the path information corresponding to the service connection from the first satellite to the third satellite, and initiates the establishment of the service connection. After the service connection is established, the uplink and downlink service data are switched. In comparison with an existing solution of path computation based on a flooding mode, in this application, the path information corresponding to the service connection to the third satellite needs to be determined only on the first satellite, and path computation does not need to be performed on each satellite for a plurality of times. Therefore, path computation frequency can be reduced, available duration of a service can be increased, and service availability can be improved. In addition, the transmission apparatus of the first satellite and the gateway station switch the service data from the service connection from the first satellite to the second satellite to the service connection from the first satellite to the third satellite only after the service connection from the first satellite to the third satellite is established, so that seamless service switching is implemented through collaboration of the first satellite, the second satellite, the third satellite, and the gateway station. In addition, connection-based transmission can greatly reduce a packet loss rate of the service in a satellite switching process.

In embodiments of this application, the embodiment shown in FIG. 6 may be used to establish the service connection from the first satellite and the second satellite, and transmit the service data on the service connection, and then the embodiment shown in FIG. 8 is used to implement service data switching that occurs when the second satellite is switched to the third satellite. Alternatively, the embodiment shown in FIG. 6 may be used to establish the service connection from the first satellite and the second satellite, and transmit the service data on the service connection, and then another solution, for example, the conventional technology described in the section of descriptions of embodiments, is used to implement service data switching that occurs when the second satellite is switched to the third satellite. Alternatively, another solution, for example, the conventional technology mentioned in the background, may be used to implement service data transmission between the first satellite and the second satellite, and then the embodiment shown in FIG. 8 is used to implement service data switching that occurs when the second satellite is switched to the third satellite. This is not limited in embodiments of this application.

It should be understood that, in the foregoing embodiments, the methods and/or steps implemented by the transmission apparatus of the first satellite, the microwave apparatus of the first satellite, the transmission apparatus of the second satellite, the microwave apparatus of the second satellite, the transmission apparatus of the third satellite, or the microwave apparatus of the third satellite may alternatively be implemented by a component (for example, a chip or a circuit) that can be used in the apparatus.

The foregoing mainly describes the solutions provided in embodiments of this application from a perspective of interaction between the transmission apparatuses. Correspondingly, an embodiment of this application further provides a transmission apparatus, and the transmission apparatus is configured to implement the foregoing methods. The transmission apparatus may be the transmission apparatus of the first satellite in the foregoing method embodiments, an apparatus including the transmission apparatus of the first satellite, or a component that can be used in the transmission apparatus of the first satellite. Alternatively, the transmission apparatus may be the transmission apparatus of the second satellite in the foregoing method embodiments, an apparatus including the transmission apparatus of the second satellite, or a component that can be used in the transmission apparatus of the second satellite. Alternatively, the transmission apparatus may be the transmission apparatus of the third satellite in the foregoing method embodiments, an apparatus including the transmission apparatus of the third satellite, or a component that can be used in the transmission apparatus of the third satellite. It may be understood that, to implement the foregoing functions, the transmission apparatus includes a hardware structure and/or a software module for performing a corresponding function. A person skilled in the art should be easily aware that, in combination with units, algorithms, and steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use a different method to implement the described functions for each particular application, but it should not be considered that the implementation goes beyond the scope of this application.

In embodiments of this application, the transmission apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. During actual implementation, another division manner may be used.

FIG. 9 is a schematic diagram of a structure of a transmission apparatus 90. The transmission apparatus 90 includes an optical transceiver module 901 and a processor 902. The optical transceiver module 901 may also be referred to as an optical transceiver unit, configured to implement a transceiver function. For example, the optical transceiver module 901 may be an optical transceiver machine, an optical transceiver circuit, an optical transceiver, or a communication interface.

When the transmission apparatus 90 is the transmission apparatus of the first satellite in the foregoing method embodiments, for specific functions of the optical transceiver module 901 and the processor 902, refer to the eighth aspect or the ninth aspect in the summary. Details are not described herein again.

An embodiment of this application further provides a microwave apparatus. The microwave apparatus is configured to implement the foregoing methods. The microwave apparatus may be the microwave apparatus of the first satellite in the foregoing method embodiments, an apparatus including the microwave apparatus of the first satellite, or a component that can be used in the microwave apparatus of the first satellite. Alternatively, the microwave apparatus may be the microwave apparatus of the second satellite in the foregoing method embodiments, an apparatus including the microwave apparatus of the second satellite, or a component that can be used in the microwave apparatus of the second satellite. Alternatively, the microwave apparatus may be the microwave apparatus of the third satellite in the foregoing method embodiments, an apparatus including the microwave apparatus of the third satellite, or a component that can be used in the microwave apparatus of the third satellite. It may be understood that, to implement the foregoing functions, the microwave apparatus includes a hardware structure and/or a software module for performing a corresponding function. A person skilled in the art should be easily aware that, in combination with units, algorithms, and steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use a different method to implement the described functions for each particular application, but it should not be considered that the implementation goes beyond the scope of this application.

In embodiments of this application, the microwave apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. During actual implementation, another division manner may be used.

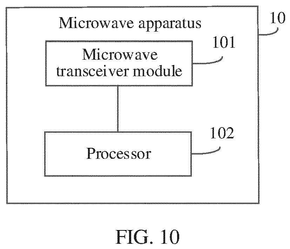

FIG. 10 is a schematic diagram of a structure of a microwave apparatus 10. The microwave apparatus 10 includes a microwave transceiver module 101 and a processor 102. The microwave transceiver module 101 may also be referred to as a microwave transceiver unit, configured to implement a transceiver function. For example, the microwave transceiver module 101 may be a microwave transceiver circuit, a microwave transceiver, a microwave transceiver machine, or a communication interface.

When the microwave apparatus 10 is the microwave apparatus of the first satellite, the microwave apparatus of the second satellite, or the microwave apparatus of the third satellite in the foregoing method embodiments, for specific functions of the microwave transceiver module 101 and the processor 102, respectively refer to the tenth aspect to the thirteenth aspect in the summary. Details are not described herein again.

It should be noted that, when the microwave apparatus 10 is the microwave apparatus of the first satellite in the foregoing method embodiments, the processor 102 is optional.

In this embodiment, the transmission apparatus 90 or the microwave apparatus 10 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions.

It should be noted that, one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built into a SoC (system-on-a-chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a PLD (programmable logic device), or a logic circuit that implements a dedicated logical operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. In a possible implementation, the chip system further includes a memory. Optionally, the chip system may include a chip, or may include a chip and another discrete component. This is not specifically limited in this embodiment of this application.

Although this application is described with reference to the embodiments, in a process of implementing this application that claims protection, a person skilled in the art may understand and implement another variation of the disclosed embodiments by viewing the accompanying drawings, disclosed content, and appended claims. In the claims, the word "comprising" (comprising) does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of protection of the claims of this application and their equivalent technologies.

## Claims

1. A satellite communication method, comprising:
detecting, by a microwave apparatus of a second satellite, that a first feeder link between the microwave apparatus of the second satellite and a gateway station is normal;
sending, by the microwave apparatus of the second satellite, first indication information to a microwave apparatus of a first satellite through a transmission apparatus of the second satellite and a transmission apparatus of the first satellite, wherein the first indication information indicates that the first feeder link is normal;
sending, by the microwave apparatus of the first satellite, a first message to the transmission apparatus of the first satellite based on the first indication information, wherein the first message is used to request to establish a service connection from the first satellite to the second satellite, the service connection is used for service data transmission between a terminal device and the gateway station, and the terminal device is connected to the first satellite;
determining, by the transmission apparatus of the first satellite, first path information based on the first message, wherein the first path information corresponds to the service connection from the first satellite to the second satellite; and
initiating, by the transmission apparatus of the first satellite based on the first path information, establishment of the service connection from the first satellite to the second satellite.

2. The method according to claim 1, wherein the method further comprises:
detecting, by a microwave apparatus of a third satellite, that a second feeder link between the microwave apparatus of the third satellite and the gateway station is normal;
sending, by the microwave apparatus of the third satellite, second indication information to the transmission apparatus of the first satellite through a transmission apparatus of the third satellite, wherein the second indication information indicates that the second feeder link is normal;
determining, by the transmission apparatus of the first satellite, second path information based on the second indication information, wherein the second path information corresponds to a service connection from the first satellite to the third satellite;
initiating, by the transmission apparatus of the first satellite based on the second path information, establishment of the service connection from the first satellite to the third satellite; and
after the service connection from the first satellite to the third satellite is established, switching, by the transmission apparatus of the first satellite, uplink service data from the service connection from the first satellite to the second satellite to the service connection from the first satellite to the third satellite; and sending, by the transmission apparatus of the first satellite, a second message to the gateway station through the transmission apparatus of the third satellite and the microwave apparatus of the third satellite, wherein the second message is used to request to switch downlink service data from the service connection from the first satellite to the second satellite to the service connection from the first satellite to the third satellite.

3. The method according to claim 2, wherein the determining, by the transmission apparatus of the first satellite, second path information based on the second indication information comprises:
determining, by the transmission apparatus of the first satellite based on the second indication information, preconfigured information about a path from the first satellite to the third satellite as the second path information; or
computing, by the transmission apparatus of the first satellite, the second path information based on the second indication information, topology information of a satellite network in which the first satellite and the third satellite are located, and address information of the third satellite from the third satellite.

4. The method according to claim 2 or 3, wherein the initiating, by the transmission apparatus of the first satellite based on the second path information, establishment of the service connection from the first satellite to the third satellite comprises:
configuring, by the transmission apparatus of the first satellite, a cross; and
sending, by the transmission apparatus of the first satellite, a third message to a transmission apparatus of another satellite on the path corresponding to the second path information, wherein the third message is used to trigger the transmission apparatus of the another satellite to configure the cross.

5. The method according to claim 1, wherein the method further comprises:
after the service connection from the first satellite to the second satellite is established, configuring, by the transmission apparatus of the first satellite, a service parameter on the service connection from the first satellite to the second satellite.

6. The method according to any one of claims 1 to 5, wherein the determining, by the transmission apparatus of the first satellite, first path information based on the first message comprises:
determining, by the transmission apparatus of the first satellite based on the first message, preconfigured information about a path from the first satellite to the second satellite as the first path information; or
computing, by the transmission apparatus of the first satellite, the first path information based on the first message, the topology information of the satellite network in which the first satellite and the second satellite are located, and address information of the second satellite from the second satellite.

7. The method according to any one of claims 1 to 6, wherein the initiating, by the transmission apparatus of the first satellite based on the first path information, establishment of the service connection from the first satellite to the second satellite comprises:
configuring, by the transmission apparatus of the first satellite, the cross; and
sending, by the transmission apparatus of the first satellite, a fourth message to a transmission apparatus of another satellite on the path corresponding to the first path information, wherein the fourth message is used to trigger the transmission apparatus of the another satellite to configure the cross.

8. A satellite communication method, comprising:
detecting, by a microwave apparatus of a third satellite, that a second feeder link between the microwave apparatus of the third satellite and a gateway station is normal;
sending, by the microwave apparatus of the third satellite, second indication information to a transmission apparatus of a first satellite through a transmission apparatus of the third satellite, wherein the second indication information indicates that the second feeder link is normal;
determining, by the transmission apparatus of the first satellite, second path information based on the second indication information, wherein the second path information corresponds to a service connection from the first satellite to the third satellite;
initiating, by the transmission apparatus of the first satellite based on the second path information, establishment of the service connection from the first satellite to the third satellite; and
after the service connection from the first satellite to the third satellite is established, switching, by the transmission apparatus of the first satellite, uplink service data from a service connection from the first satellite to a second satellite to the service connection from the first satellite to the third satellite; and sending, by the transmission apparatus of the first satellite, a second message to the gateway station through the transmission apparatus of the third satellite and the microwave apparatus of the third satellite, wherein the second message is used to request to switch downlink service data from the service connection from the first satellite to the second satellite to the service connection from the first satellite to the third satellite.

9. The method according to claim 8, wherein the determining, by the transmission apparatus of the first satellite, second path information based on the second indication information comprises:
determining, by the transmission apparatus of the first satellite based on the second indication information, preconfigured information about a path from the first satellite to the third satellite as the second path information; or
computing, by the transmission apparatus of the first satellite, the second path information based on the second indication information, topology information of a satellite network in which the first satellite and the third satellite are located, and address information of the third satellite from the third satellite.

10. The method according to claim 8 or 9, wherein the initiating, by the transmission apparatus of the first satellite based on the second path information, establishment of the service connection from the first satellite to the third satellite comprises:
configuring, by the transmission apparatus of the first satellite, a cross; and
sending, by the transmission apparatus of the first satellite, a third message to a transmission apparatus of another satellite on the path corresponding to the second path information, wherein the third message is used to trigger the transmission apparatus of the another satellite to configure the cross.

11. A transmission apparatus of a first satellite, comprising a processor and an optical transceiver module, wherein
the optical transceiver module is configured to: receive first indication information from a transmission apparatus of a second satellite, and send the first indication information to a microwave apparatus of the first satellite, wherein the first indication information indicates that a first feeder link between a microwave apparatus of the second satellite and a gateway station is normal;
the optical transceiver module is further configured to receive a first message from the microwave apparatus of the first satellite, wherein the first message is used to request to establish a service connection from the first satellite to the second satellite, the service connection is used for service data transmission between a terminal device and the gateway station, and the terminal device is connected to the first satellite;
the processor is configured to determine first path information based on the first message, wherein the first path information corresponds to the service connection from the first satellite to the second satellite; and
the processor is further configured to initiate, based on the first path information, establishment of the service connection from the first satellite to the second satellite.

12. The transmission apparatus according to claim 11, wherein
the optical transceiver module is further configured to receive second indication information from a transmission apparatus of a third satellite, wherein the second indication information indicates that a second feeder link between a microwave apparatus of the third satellite and the gateway station is normal;
the processor is further configured to determine second path information based on the second indication information, wherein the second path information corresponds to a service connection from the first satellite to the third satellite;
the processor is further configured to initiate, based on the second path information, establishment of the service connection from the first satellite to the third satellite;
the processor is further configured to: after the service connection from the first satellite to the third satellite is established, switch uplink service data from the service connection from the first satellite to the second satellite to the service connection from the first satellite to the third satellite; and
the optical transceiver module is further configured to: after the service connection from the first satellite to the third satellite is established, send a second message to the gateway station through the transmission apparatus of the third satellite and the microwave apparatus of the third satellite, wherein the second message is used to request to switch downlink service data from the service connection from the first satellite to the second satellite to the service connection from the first satellite to the third satellite.

13. The transmission apparatus according to claim 12, wherein that the processor is further configured to determine the second path information based on the second indication information comprises:
being configured to: determine, based on the second indication information, preconfigured information about a path from the first satellite to the third satellite as the second path information; or compute the second path information based on the second indication information, topology information of a satellite network in which the first satellite and the third satellite are located, and address information of the third satellite from the third satellite.

14. The transmission apparatus according to claim 12 or 13, wherein that the processor is further configured to initiate, based on the second path information, the establishment of the service connection from the first satellite to the third satellite comprises:
being configured to: configure a cross; and send a third message to a transmission apparatus of another satellite on the path corresponding to the second path information, wherein the third message is used to trigger the transmission apparatus of the another satellite to configure the cross.

15. The transmission apparatus according to claim 11, wherein
the processor is further configured to: after the service connection from the first satellite to the second satellite is established, configure a service parameter on the service connection from the first satellite to the second satellite.

16. The transmission apparatus according to any one of claims 11 to 15, wherein that the processor is configured to determine the first path information based on the first message comprises:
being configured to: determine, based on the first message, preconfigured information about a path from the first satellite to the second satellite as the first path information; or compute the first path information based on the first message, the topology information of the satellite network in which the first satellite and the second satellite are located, and address information of the second satellite from the second satellite.

17. The transmission apparatus according to any one of claims 11 to 15, wherein that the processor is further configured to initiate, based on the first path information, the establishment of the service connection from the first satellite to the second satellite comprises:
being configured to: configure the cross; and send a fourth message to a transmission apparatus of another satellite on the path corresponding to the first path information, wherein the fourth message is used to trigger the transmission apparatus of the another satellite to configure the cross.

18. A microwave apparatus of a first satellite, comprising a microwave transceiver module,
wherein
the microwave transceiver module is configured to receive first indication information from a microwave apparatus of a second satellite through a transmission apparatus of the first satellite and a transmission apparatus of the second satellite, wherein the first indication information indicates that a first feeder link between the microwave apparatus of the second satellite and a gateway station is normal; and
the microwave transceiver module is further configured to send a first message to the transmission apparatus of the first satellite based on the first indication information, wherein the first message is used to request to establish a service connection from the first satellite to the second satellite, the service connection is used for service data transmission between a terminal device and the gateway station, and the terminal device is connected to the first satellite.

19. A microwave apparatus of a third satellite, comprising a processor and a microwave transceiver module, wherein
the processor is configured to detect that a second feeder link between the microwave apparatus of the third satellite and a gateway station is normal;
the microwave transceiver module is configured to send second indication information to a microwave apparatus of a first satellite through a transmission apparatus of the third satellite and a transmission apparatus of the first satellite, wherein the second indication information indicates that the second feeder link is normal; and
the microwave transceiver module is further configured to: receive, through the transmission apparatus of the third satellite, a second message from the transmission apparatus of the first satellite, and send the second message to the gateway station, wherein the second message is used to request to switch downlink service data from a service connection from the first satellite to a second satellite to a service connection from the first satellite to the third satellite.

20. A satellite communication system, comprising a microwave apparatus of a second satellite, a transmission apparatus of the second satellite, a microwave apparatus of a first satellite, and a transmission apparatus of the first satellite, wherein
the microwave apparatus of the second satellite is configured to: after detecting that a first feeder link between the microwave apparatus of the second satellite and a gateway station is normal, send first indication information to the microwave apparatus of the first satellite through the transmission apparatus of the second satellite and the transmission apparatus of the first satellite, wherein the first indication information indicates that the first feeder link is normal;
the microwave apparatus of the first satellite is configured to send a first message to the transmission apparatus of the first satellite based on the first indication information, wherein the first message is used to request to establish a service connection from the first satellite to the second satellite, the service connection is used for service data transmission between a terminal device and the gateway station, and the terminal device is connected to the first satellite; and
the transmission apparatus of the first satellite is configured to: determine first path information based on the first message, and initiate, based on the first path information, establishment of the service connection from the first satellite to the second satellite, wherein the first path information corresponds to the service connection from the first satellite to the second satellite.

21. A satellite communication system, comprising a microwave apparatus of a third satellite, a transmission apparatus of the third satellite, and a transmission apparatus of a first satellite, wherein
the microwave apparatus of the third satellite is configured to: after detecting that a second feeder link between the microwave apparatus of the third satellite and a gateway station is normal, send second indication information to the transmission apparatus of the first satellite through the transmission apparatus of the third satellite, wherein the second indication information indicates that the second feeder link is normal;
the transmission apparatus of the first satellite is configured to determine second path information based on the second indication information, wherein the second path information corresponds to a service connection from the first satellite to the third satellite;
the transmission apparatus of the first satellite is further configured to initiate, based on the second path information, establishment of the service connection from the first satellite to the third satellite; and
after the service connection from the first satellite to the third satellite is established, the transmission apparatus of the first satellite is further configured to: switch uplink service data from a service connection from the first satellite to a second satellite to the service connection from the first satellite to the third satellite; and send a second message to the gateway station through the transmission apparatus of the third satellite and the microwave apparatus of the third satellite, wherein the second message is used to request to switch downlink service data from the service connection from the first satellite to the second satellite to the service connection from the first satellite to the third satellite.
